# EUROPEAN PATENT SPECIFICATION

(11) **EP 0 823 031 B1**
(45) Date of publication and mention of the grant of the patent: **22.03.2000**
(21) Application number: 96911105.3
(22) Date of filing: 18.04.1996
(51) Int. Cl.: F16L 13/10, F16L 9/14

(54) **TUBE OF COMPOSITE MATERIAL**
ROHR AUS KOMPOSIT-MATERIAL
TUBE DE MATERIAUX COMPOSITES

(30) Priority: 18.04.1995 NL 1000160
(43) Date of publication of application: 11.02.1998
(73) Proprietor: NEDERLANDSE ORGANISATIE VOOR TOEGEPAST-NATUURWETENSCHAPPELIJK ONDERZOEK TNO, 2628 VK Delft (NL)
(72) Inventor: PEETERS, Johannes, Hendricus, Alphonsus, NL-3021 KE Rotterdam (NL); VERHEUS, Albert, Simon, NL-2624 BK Delft (NL)
(74) Representative: de Bruijn, Leendert C.
(86) International application number: NL9600169
(87) International publication number: WO9633361

(56) References cited:
- GB-A- 1 335 756
- GB-A- 2 219 057
- GB-A- 2 219 058
- US-A- 3 388 932

## Description

The invention relates to a high quality composite tube consisting of a plastic-impregnated tubular interweave of threads or fibres, the angle of which with respect to the centre line of the tube is the determining factor for the diameter.

Composite tubes of this type are used, inter alia, as the drive shaft for helicopters, and are known for their great torsional strength. The connecting flange can form an integral whole with the tube. A drawback of the use of a tubular interweave can be that the ends of the tubes rapidly start to fray.

The aim of the invention is to overcome this drawback and also to make the tube of such construction that the latter is outstandingly suitable for joining by one or both ends to another tube.

According to the invention, the tube mentioned in the preamble is, to this end, characterised in that at least one end of the interweave is widened and folded over outwards or inwards one or more times, the widened end being able to serve as the connection element with another tube.

The connection between one tube and another can be effected by means of the plastic impregnation itself or, after the plastic impregnation has been applied separately, by gluing.

If the tube runs at an angle with respect to another tube, said other tube can be clicked into the saddle-shaped widening of the first tube which fits around it.

The one and the other tube can also be in line with one another.

The invention also relates to a tubular connection piece formed from the above mentioned tube, the one widened end of which is joined to a first tube which runs at an angle with respect to the connection piece and the other end of which is joined to a second tube which extends in line with the connection piece.

The fibres or threads preferably consist of glass, aramide or carbon and the plastic impregnation preferably consists of epoxy resin or polyester.

The invention will be explained in more detail with reference to the figures.

Figure 1 shows a first embodiment of part of a tube according to the invention.

Figure 2 shows a second embodiment of part of the tube according to the invention.

Figure 3 shows a connection construction for two metal or plastic tubes running perpendicular to one another.

Figure 4 shows two composite tubes joined to one another.

Figure 5 shows a cross-section through the tubes according to Figure 4.

Figure 6 shows a tube according to the invention which is joined to a second tube in line therewith.

Figure 7 shows a bicycle in which use has been made of tubular connection pieces according to the invention.

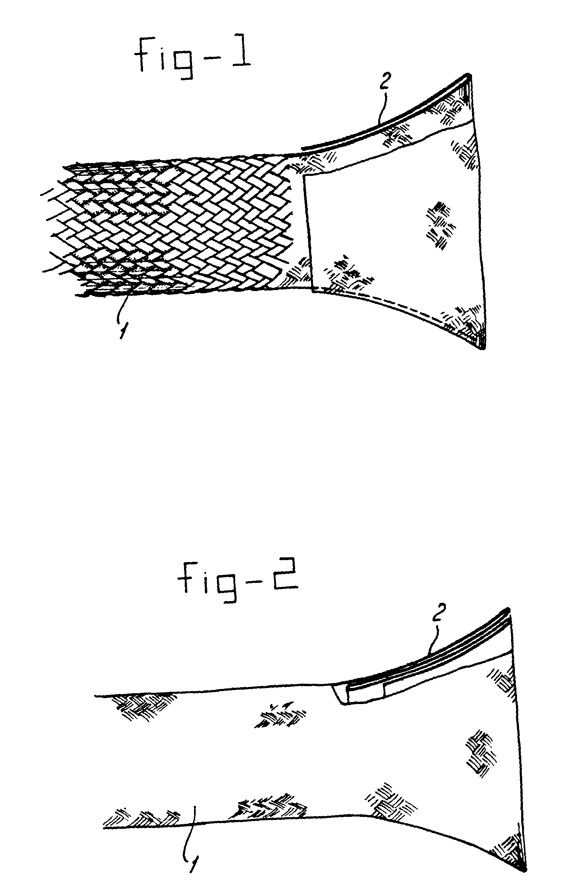

Figure 1 shows part of a tube consisting of a tubular interweave 1 made of threads or fibres of glass, carbon or aramide or another strong plastic, and an impregnation of epoxy resin, polyester or another suitable plastic. For the sake of clarity, only the interweave is shown on the left; both the interweave and the impregnation are shown on the right.

The threads or fibres of the interweave make an angle with respect to the centre line of the tubular interweave and a mathematical relationship exists between this angle and the diameter of the interweave. For each transition it is possible to calculate what the fibre angle will be and how strong the construction is.

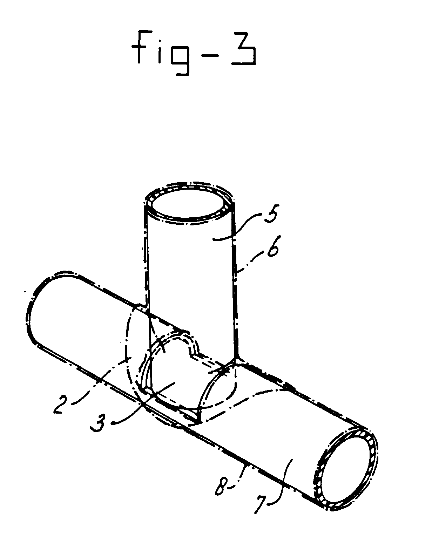

The important feature is that the end shown at 2 is widened in a flare and the interweave is folded over. This folding over is shown as a single fold outwards in Figure 1 and as multiple folds inwards in Figure 2.

Figure 3 shows that a composite tube 6 (indicated by dash-and-dot lines) according to Figure 1 or 2 is fitted around a metal or plastic tube 5, that a composite tube 8 (dash-and-dot lines) is fitted around a metal or plastic tube 7 and that a connection is made between the composite tubes 6 and 8 whereby the vertical composite tube 6 is provided with the abovementioned flared end 2 and the wall of the tubes 7 and 8 is provided with an opening 3. The flared end section of the composite tube 6, which end section is folded over, extends in a saddle shape over the horizontal pipes 7 and 8 at the location of the opening 3.

Figure 4 shows the connection between two composite tubes running perpendicular to one another.

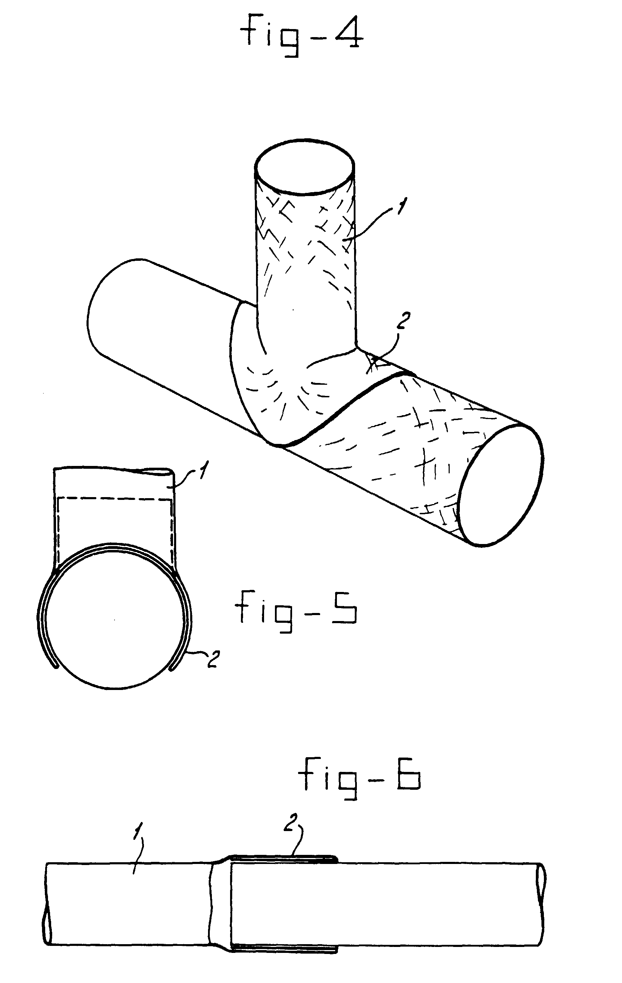

As can be seen from Figure 5, the horizontal pipe has been, as it were, clicked into the widening 2 of the vertical pipe. The connection between the two pipes in this position can be effected by the plastic impregnation which is applied after the two tubular interweaves have been brought into the position according to Figure 3. Another possibility is that the two interweaves are provided with an impregnation beforehand and are glued to one another in the mutual position according to Figure 3.

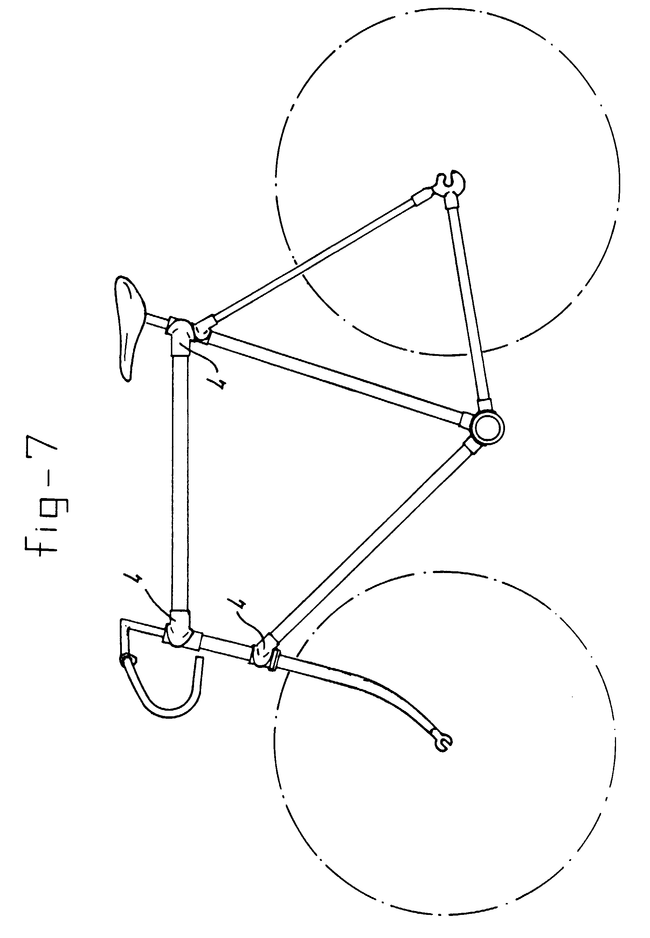

Figure 6 shows the situation where two pipes are connected in line with one another, the left hand pipe being provided with a widening 2 with fold-over, into which one end of the right hand pipe has been inserted. The overlapping pipe sections are joined to one another by a common impregnation or by gluing.

In the bicycle frame according to Figure 7, use has been made of various connection pieces 4 for joining together frame tubes which, in order to save weight, preferably also consist of plastic-impregnated interweave tubes. The connection pieces 4 have, at one end, the flared widened section 2 which fits in a saddle shape around a tube positioned at an angle with respect to the centre line of said connection pieces and, at the other end, a section which fits over a frame tube running in line with the centre line of the connection pieces.

The most important aspects of the invention are the folded-over end of the interweave tube, as a result of which there is no fraying in a troublesome location, and the flared widening of a folded-over end, by which means a robust, easy to produce connection with another tube can be provided.

## Claims

1. High quality composite tube consisting of a plastic-impregnated tubular interweave of threads or fibres, the angle of which with respect to the centre line of the tube is the determining factor for the diameter, characterised in that at least one end of the interweave is widened and folded over outwards or inwards one or more times, the widened end being able to serve as the connection element with another tube.

2. Tube according to Claim 1 connected to another tube, characterised in that the connection between the one and the other tube is produced by the plastic impregnation.

3. Tube according to Claim 1, connected to another tube, characterised in that the connection between the one and the other tube has been produced by gluing.

4. Tube according to Claim 2 or 3, characterised in that said tube runs at an angle with respect to the other tube and said other tube has been clicked into a saddle-shaped widening of the first tube which fits around it.

5. Tube according to Claim 2 or 3, characterised in that the one tube and the other tube are in line with one another.

6. Tubular connection piece formed from the tube according to Claim 1, characterised in that the one widened end is joined to a first tube which runs at an angle with respect to the connection piece and the other end is joined to a second tube which extends in line with the connection piece.

7. Tube according to one of claims 1 to 5, characterised in that the fibres or threads consist of glass, aramide or carbon and the plastic impregnation consists of epoxy resin or polyester.

8. Pipes made of metal or plastic which run at an angle with respect to one another and are connected to one another in that a composite tube consisting of a plastic-impregnated tubular interweave has been fitted around both pipes, one of said composite tubes consisting of the tube according to Claim 1, which is joined by its flared end to the other composite tube.

## Patentansprüche

1. Qualitativ hochwertiges Verbundwerkstoffrohr, das aus einem mit Kunststoff imprägnierten rohrförmigen Geflecht aus Fäden oder Fasern besteht, deren Winkel zur Mittellinie des Rohres den Durchmesser bestimmt, **dadurch gekennzeichnet**, daß an mindestens einem Ende das Geflecht aufgeweitet ist und ein oder mehrmals nach außen oder nach innen umgeschlagen ist, wobei das aufgeweitete Ende als Verbindungselement mit einem anderen Rohr dienen kann.

2. Rohr nach Anspruch 1, verbunden mit einem anderen Rohr, **dadurch gekennzeichnet**, daß die Verbindung zwischen dem einen und dem anderen Rohr durch die Kunststoffimprägnierung hergestellt ist.

3. Rohr nach Anspruch 1, verbunden mit einem anderen Rohr, **dadurch gekennzeichnet**, daß die Verbindung zwischen dem einen und dem anderen Rohr durch Kleben hergestellt ist.

4. Rohr nach Anspruch 2 oder 3, **dadurch gekennzeichnet,** daß das Rohr unter einem bestimmten Winkel zu dem anderen Rohr verläuft und das andere Rohr in eine es umfassende sattelförmige Verbreiterung des ersten Rohres geklickt worden ist.

5. Rohr nach Anspruch 2 oder 3, **dadurch gekennzeichnet,** daß das eine Rohr und das andere Rohr zueinander in einer Linie ausgerichtet sind.

6. Rohrförmiges Verbindungsstück, das aus dem Rohr gemäß Anspruch 1 gebildet wird, **dadurch gekennzeichnet,** daß das eine verbreiterte Ende mit einem ersten Rohr verbunden ist, das unter einem Winkel zu dem Verbindungsstück verläuft, und das andere Ende mit einem zweiten Rohr verbunden ist, das sich in einer Linie mit dem Verbindungsstück erstreckt.

7. Rohr nach einem der Ansprüche 1 bis 5, **dadurch gekennzeichnet,** daß die Fasern oder Fäden aus Glas, Aramid oder Kohlenstoff bestehen, und daß die Kunststoffimprägnierung aus Epoxyharz oder Polyester besteht.

8. Rohre aus Metall oder Kunststoff, die unter einem Winkel zueinander verlaufen und miteinander dadurch verbunden sind, daß ein Verbundwerkstoffrohr aus einem kunststoffimprägnierten rohrförmigen Geflecht um beide Rohre angepaßt worden ist, wobei eines der Verbundwerkstoffrohre aus einem Rohr gemäß Anspruch 1 besteht, das mit seinem konisch erweiterten Ende mit dem anderen Verbundwerkstoffrohr verbunden ist.

## Revendications

1. Tube composite de haute qualité constitué par un entrelacement tubulaire de fils ou de fibres imprégné de plastique, dont l'angle par rapport à la ligne centrale du tube est le facteur déterminant par le diamètre, caractérisé en ce qu'au moins une extrémité de l'entrelacement est évasée et repliée sur elle-même vers l'extérieur ou vers l'intérieur, une ou plusieurs fois, l'extrémité évasée pouvant servir comme élément de connexion avec un autre tube.

2. Tube selon la revendication 1, connecté à un autre tube, caractérisé en ce que la connexion entre le tube et l'autre tube est produite par l'imprégnation plastique.

3. Tube selon la revendication 1, connecté à un autre tube, caractérisé en ce que la connexion entre le tube et l'autre tube a été produite par collage.

4. Tube selon la revendication 2 ou 3, caractérisé en ce que ledit tube fait un angle par rapport à l'autre tube et ledit autre tube a été cliqueté dans un élargissement en forme de selle du premier tube qui s'adapte autour de lui.

5. Tube selon la revendication 2 ou 3, caractérisé en ce que le tube et l'autre tube sont alignés l'un avec l'autre.

6. Pièce de connexion tubulaire formée à partir du tube de la revendication 1, caractérisé en ce que l'extrémité évasée est réunie à un premier tube qui fait un angle par rapport à la pièce de connexion et l'autre extrémité est réunie à un second tube qui est aligné avec la pièce de connexion.

7. Tube selon l'une des revendications 1 à 5, caractérisé en ce que les fibres ou fils consistent en verre, aramide ou carbone et l'imprégnation plastique consiste en résine époxy ou polyester.

8. Tuyaux en métal ou en plastique, faisant un angle l'un par rapport à l'autre, et qui sont connectés l'un à l'autre grâce au fait qu'un tube composite consistant en un entrelacement tubulaire imprégné de plastique a été adapté autour des deux tuyaux, l'un desdits tubes composites étant constitué par le tube selon la revendication 1, qui est réuni par son extrémité évasée à l'autre tube composite.
